**Europäisches Patentamt**

(19) **European Patent Office**

**Office européen des brevets**

(11) Numéro de publication: **0 012 649**
**B1**

(12) **FASCICULE DE BREVET EUROPEEN**

(45) Date de publication du fascicule du brevet:
19.01.83

(51) Int. Cl.³: **G 11 B 5/49**, G 11 B 5/30,
G 11 B 5/43, H 04 N 9/535

(21) Numéro de dépôt: **79400920.9**

(22) Date de dépôt: **27.11.79**

(54) **Tête de lecture magnétique.**

(30) Priorité: **08.12.78 FR 7834648**

(43) Date de publication de la demande:
**25.06.80 Bulletin 80/13**

(45) Mention de la délivrance du brevet:
**19.01.83 Bulletin 83/3**

(84) Etats contractants désignés:
**DE FR GB NL**

(56) Documents cités:
**DE-A-2 708 672**
**FR-A-1 173 945**
**FR-A-1 289 622**
**FR-A-2 247 865**
**GB-A-1 148 462**
**US-A-3 443 036**
**US-A-3 877 069**
**US-A-3 936 883**
**US-A-3 987 485**

(73) Titulaire: **THOMSON-CSF, 173, Boulevard Haussmann,
F-75379 Paris Cedex 08 (FR)**

(72) Inventeur: **Lehureau, Jean-Claude, "THOMSON-CSF" -
SCPI 173, bld Haussmann, F-75360 Paris Cedex 08 (FR)**

(74) Mandataire: **Desperrier, Jean-Louis et al,
THOMSON-CSF SCPI 173, Bld Haussmann,
F-75379 Paris Cedex 08 (FR)**

**RADIO CORPORATION OF AMERICA-RCA LA-
BORATORIES – TECHNICAL NOTES, issue no. 5,
TN-203, 30 décembre 1958, Princeton, N. J., US
HALL: »Tape skew corrector«, pages 1, 2
IBM TECHNICAL DISCLOSURE BULLETIN, vol.
17, no. 12, mai 1975, New York, US, LEAN et al.:
»Scanned tapped magnetoresistive sensor«,
pages 3778 – 3779**

BUNDESDRUCKEREI BERLIN

# 0 012 649

## Tete de lecture magnétique

La présente invention se rapporte aux têtes de lecture magnétiques qui permettent de lire un enregistrement effectué sur un support magnétisable tel qu'une bande recouverte d'une couche d'oxyde de fer.

Il est connu de faire des têtes de lecture magnétiques en utilisant un anneau magnétique muni d'un entrefer et d'un bobinage. La bande magnétique défile au contact de l'entrefer, et les particules aimantées de manière variable qu'elle supporte induisent dans l'anneau magnétique un flux qui provoque l'apparition de signaux de lecture aux bornes du bobinage. La bande passante de ces signaux est liée à la vitesse de défilement de la bande magnétique, et pour enregistrer des signaux de télévision il faut atteindre des vitesses relatives tête/bande de l'ordre de 5 m/s. Ceci conduit à utiliser dans les magnétoscopes un système mécanique complexe pour obtenir une piste d'enregistrement composée de segments parallèles inclinés par rapport à l'axe de cette bande et s'étendant entre ses deux bords. Pour cela on compose deux mouvements mécaniques: un mouvement longitudinal classique de la bande magnétique d'une part; un mouvement transversal de la tête d'autre part.

Une solutions conne (FR-A-2 247 865) pour supprimer ce mouvement transversal consiste à inscrire l'information à mémoriser sur la bande magnétique sous forme de segments de piste parallèles entre eux et perpendiculaires à la direction du mouvement de la bande. La tête magnétique de lecture d'un tel support d'enregistrement effectue donc une acquisition simultanée, c'est-à-dire en parallèle, de toutes les informations d'un même segment: ces informations ne sont exploitables que si elles sont restituées en série.

Ceci suppose que:
- le capteur de la tête de lecture soit une barrette de longueur au moins égale à celle du segment de piste enregistrée.
- les informations acquises en parallèle soient stockées en mémoire pour pouvoir être restituées en série sons le contrôle d'une horloge externe.
- les mouvements relatifs d'un segment de piste long de 6,35 mm (¼" normalisé) par rapport au capteur soient étroitement contrôlés. En effet, l'acquisition en parallèle de toutes les informations d'un tel segment de piste pose des problèmes inconnus avec les têtes de lecture classiques, dans lesquelles les dimensions de pistes lues se comptent en dizaines de microns, pour une seule information.

De plus, si l'information enregistrée est un signal vidéo-composite, transmis sous la forme d'une information de son, une information de luminance — image en noir et blanc — et une information de chrominance — coloration de l'image — il est nécessaire de retrouver dans l'information de luminance les impulsions de synchronisation de balayage lignes, sans lesquelles l'image vidéo serait inexploitable.

Certains éléments sont connus de la technique antérieure. Ainsi, le brevet US 3,443,036 révèle une tête de lecture, destinée à lire des informations telles que définies, que utilise comme capteur des transducteurs magnétoélectriques à effet Hall, formant une barrette qui affleure le support magnétique enregistré. Les informations, acquises en parallèle, sont stockées dans des bascules qui font office de point mémoire, puis restituées en série, les bascules étant vidées en cascade.

Dans RCA Technical Note du 30 Décembre 1958, TN 203, est décrit un procédé de correction d'obliquité de la bande par rapport à une tête de lecture magnétique. Prévu pour quatre pistes vidéo multiplexées sur une même bande, le système nécessite une cinquième piste, centrale, sur laquelle est enregistré un signal de synchronisation à haute fréquence. Les signaux vidéo sont échantillonnés une première fois par un signal dérivé de la piste de synchronisation, et chargent des condensateurs, puis réchantillonnés une seconde fois. Mais les signaux de commande du premier échantillonneur transitent par des unités de retard variable, elles-mêmes commandées par un comparateur de phase, associé à un diviseur de tension, qui compare les impulsions de synchronisation vidéo des deux pistes enregistrées extrêmes.

Selon d'autres documents encore, tel IBM Techn. Discl. Bulletin, vol 17, N° 12 de mai 1975, la tête de lecture comporte un senseur magnéto-résistif ou un film piézoélectrique, associé à des bascules, commandées par un registre à décalage.

L'invention concerne une tête de lecture magnétique destinée à lire, sur un support magnétique défilant selon une direction, une succession de segments de piste, de même longueur, parallèles entre eux et non parallèles à cette direction, l'acquisition des données ($S_1$, Y, Y—R, Y—B, $S_2$) enregistrées sur chaque segment de piste étant effectuée en parallèle au moyen d'éléments d'un capteur magnéto-électrique en forme de barrette de longueur égale à celle des segments de piste, et la restitution des données acquises et stockées dans un circuit de mémoire étant effectuée en série sous le contrôle d'une horloge externe. Le but de l'invention est de compenser l'obliquité d'une telle tête. Cette tête de lecture est caractérisée en ce que:
- une partie au moins des signaux de lecture (Y, Y—R, Y—B) sont amplifiés et stockés dans des dispositifs à transfert de charges, dont chaque entrée est contrôlée par une porte analogique recevant un signal de lecture;
- une autre partie des signaux de lecture ($S_1$, $S_2$) acquis simultanément en vue de mesurer l'obliquité

**0 012 649**

d'un segment de piste par rapport au capteur par deux groupes d'éléments situés aux deux extrémités du capteur, sont traités, pour chacun des deux groupes, par un amplificateur sommateur suivi par un amplificateur écrêteur et par un générateur de signaux qui délivre une onde sinusoïdale sur une ligne résistive, l'écart de déphasage entre les deux ondes sinusoïdales, correspondant aux deux groupes d'éléments du capteur, représentant l'obliquité d'un segment de piste par rapport au capteur;

— l'acquisition en parallèle des signaux de lecture sur les entrées des dispositifs à transfert de charge est commandé par une pluralité de comparateurs les deux entrées de chaque comparateur étant connectées en deux points des deux lignes résistives, les niveaux d'atténuation des deux points étant symétriquement opposés, et la sortie de chaque comparateur étant connectée à l'une des portes analogiques de contrôle des entrées des dispositifs à transfert de charge, les comparateurs émettant un signal d'ouverture lorsque la différence des tensions à leurs entrées change de sens;

— la restitution en série des signaux de lecture stockés dans les dispositifs à transfert de charge étant commandée par l'horloge externe par l'intermédiaire de circuits d'élaboration des signaux de transfert qui commandent les sorties des dispositifs à transfert de charges.

D'autres particularités et avantages de l'invention apparaitront clairement dans la description suivante présentée à titre d'exemple non limitatif et faite en regard des figures annexées suivantes:

— la figure 1, qui représente symboliquement le signal enregistré sur un fragment de bande magnétique;

— la figure 2, qui représente le schéma d'une tête de lecture conforme à l'invention;

— la figure 3, qui représente le schéma partiel d'un lecteur magnétique muni d'une telle tête de lecture.

Dans l'exemple de réalisation décrit les dimensions et la sensibilité des contacts magnéto-sensibles ainsi que la densité d'intégration des circuits permettent d'obtenir une tête susceptible de lire 600 points espacés de 10 $\mu$m et répartis sur un segment long d'environ 6 mm. Ce segment peut donc être perpendiculaire à l'axe d'une bande magnétique standard de 6,35 mm de large. Une telle résolution permet d'autre part d'inscrire dans un tel segment l'information contenue dans une ligne d'une image de télévision en couleur et celle correspondant à l'échantillon de signal sonore accompagnant cette image et pris pendant la durée de cette ligne.

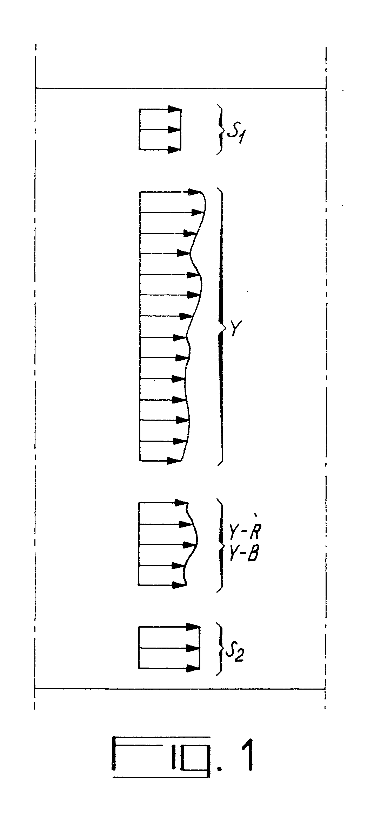

On a représenté sur la figure 1 de manière symbolique le champ magnétique le long d'un tel segment isolé pour les besoins du dessins sur un fragment de bande magnétique délimité par deux traits mixtes. Ce champ est figuré sous la forme de flèches de dimensions variables correspondant aux chemins parcourus par les contacts magnéto-sensibles. Le nombre de flèches est toutefois considérablement réduit par rapport au nombre de contacts pour que le dessin soit lisible. On a ainsi de haut en bas tout d'abord 25 chemins (3 flèches) permettant d'enregistrer un premier signal sonore $S_1$. Ce nombre important permet d'obtenir un grand rapport signal sur bruit nécessaire à cause de la grande dynamique des signaux sonores par rapport aux signaux vidéo. Dans l'exemple décrit le signal sonore module en amplitude une porteuse à fréquence ligne enregistrée directement sur la bande et ces signaux sont identiques, mais on pourrait utiliser d'autres systèmes.

On trouve ensuite 400 chemins (14 flèches) permettant d'enregistrer le signal de luminance Y d'une ligne d'une image. On remarque que de cette manière on trouve le long de ces 400 chemins sur la bande magnétique une succession d' «images magnétique» représentant les images du signal de télévision.

On a ensuite 150 chemins (5 flèches) permettant d'enregistrer en alternance suivant les segments les signaux de différence de couleurs Y—R et Y—B qui serviront à reconstituer dans le lecteur une image en couleurs en utilisant les procédés connus pour les systèmes séquentiels de télévision en couleurs. Il est utile de séparer l'enregistrement des signaux de chrominance et de luminance car l'enregistrement d'un signal vidéo composite nécessite des tolérances plus réduites sur la linéarité et l'intermodulation.

On trouve enfin 25 chemins (3 flèches) permettant d'enregistrer un deuxième signal sonore ce qui permet par exemple de faire de la stéréophonie ou de la traduction simultanée.

Ces groupes de chemins sont séparés les uns des autres par des intervalles de garde d'environ 70 $\mu$ qui permettent de ne pas mélanger les signaux lors des mouvements de lacet inévitables de la bande. Ces mouvements de lacet n'amènent ainsi qu'une perte imperceptible de signal et non des mélanges intolérables tels que du son dans l'image.

La tête de lecture selon l'invention ne permet pas d'enregistrer une telle bande magnétique. Pour effectuer un tel enregistrement différents procédés sont utilisables. On peut par exemple utiliser un système magnéto-optique tel que celui décrit dans le brevet américain N° 3,228,015 délivré le 4 Janvier 1966 au nom de J. J. Miyata et al. Dans un tel système on porte au delà du point de Curie la couche magnétique à l'aide d'un faisceau lumineux ce qui permet au refroidissement d'obtenir un changement du sens de magnétisation du point chauffé. L'utilisation d'un faisceau lumineux permet d'une part d'obtenir une trace d'inscription ayant les faibles dimensions souhaitées et d'autre part une vitesse d'inscription convenable. Il est aisé d'utiliser quatre faisceaux distincts pour enregistrer les deux signaux sonores, le signal de luminance et le signal de chrominance.

On peut utiliser pour fabriquer les contacts magnéto-sensibles différents matériaux. Une première catégorie de matériaux comprend les magnéto-résistifs tels que le Permalloy. Un barreau de dimensions

3

$$L \times I \times e = 6 \text{ mm} \times 5 \ \mu m \times 0,15 \ \mu m$$

se magnétise de façon spontanée dans le sens de la longueur. Cette magnétisation se retourne de 90° sous l'action d'un champ de 300 Oe appliqué dans le sens de la profondeur I ce qui entraine une variation de résistivité d'environ 1/100. Pour obtenir une bonne linéarité, on peut utiliser un champ variant de ±100 Oe autour d'une valeur de polarisation égale à 150 Oe. Dans ces conditions pour un courant injecté dans le sens de la longueur L avec une densité de $3.10^6$ A/cm$^2$, l'écart de résistivité entre deux électrodes distantes de 6 $\mu m$ (pour avoir une marge entre les points de lecture répartis tous les 10 $\mu m$) est de 0,5 $\mu \Omega \cdot$ cm, ce qui donne en sortie du contact un signal utile de 1 mV crête à crête.

Une deuxième catégorie de matériaux comprend ceux permettant d'utiliser l'effet Hall, c'est-à-dire essentiellement les semi-conducteurs tels que l'Antimoniure d'Indium, et les ferro-électriques tels que les alliages de Cobalt et de Gadolinium.

Pour un barreau d'Antimoniure d'Indium de dimensions

$$L \times I \times e = 6 \text{ mm} \times 5 \ \mu m \times 1 \ \mu m,$$

soumis à un champ électrique de 200 V/cm dans le sens de la longueur L et parcouru par un courant de 25 mA selon cette longueur, on obtient une sensibilité de 50 $\mu$V/Oe. Pour un barreau d'un alliage de Cobalt et de Gadolinium la sensibilité est de 3,5 $\mu$V/Oe.

Selon le matériau utilisé le champ actif dans la bande magnétique doit être orienté différemment. C'est ainsi que pour les magnéto-résistifs il doit être perpendiculaire à la bande et pour ceux utilisant l'effet Hall il doit être parallèle à celle-ci et dirigé selon sa longueur. Ceci ne présente pas de difficultés et s'obtient en orientant au moyen d'un champ de polarisation de manière adéquate lors de la fabrication les particules magnétiques formant la couche sensible. Le champ magnétique d'enregistrement sera alors appliqué dans le sens désiré selon la tête de lecture prévue et pourra se développer dans ce sens puisque les particules auront été orientées selon celui-ci.

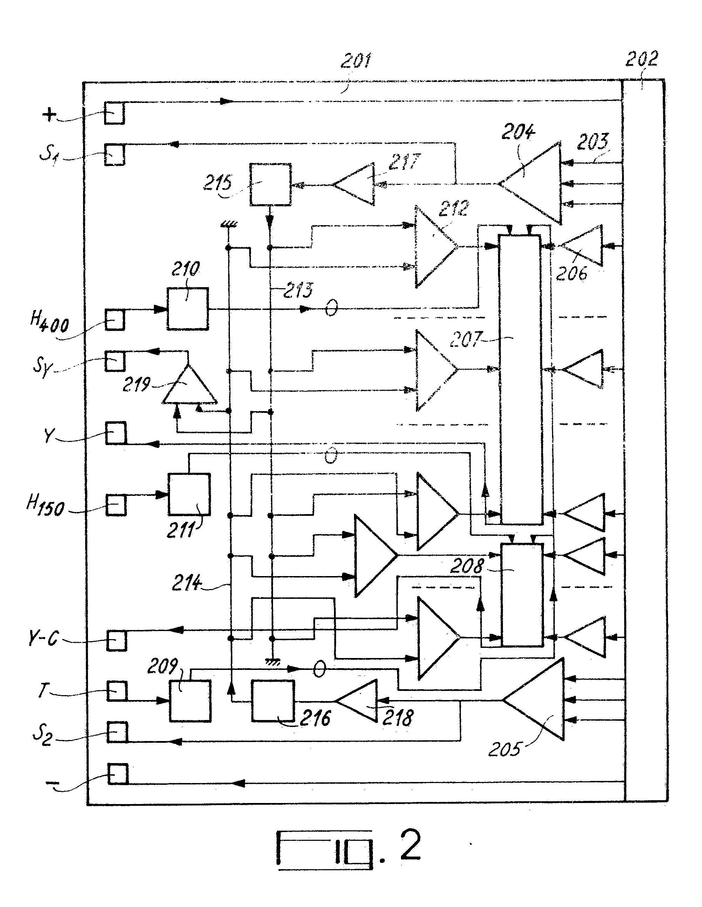

Une tête de lecture utilisant un barreau d'Antimoniure d'Indium a été représentée sur la figure 2. Cette représentation est largement symbolique et partielle pour des raisons de clarté. C'est ainsi qu'on n'a représenté qu'un nombre limité des points de lecture et des organes correspondants, que les circuits sont sous forme de symboles, les connexions représentées par des flèches, et que certains organes annexes tels que les connexions d'alimentation n'ont pas été représentés.

Cette tête est réalisée sur une plaquette de silicium 201 de 7 mm × 4 mm formant substrat. On a recouvert cette plaquette par dépôt ionique d'une couche d'Antimoniure d'Indium épaisse de 1 $\mu m$ puis on a photogravé cette couche pour obtenir la barrette magnéto-sensible 202 qui d'étend tout le long du côté droit de la plaquette et est large de 5 $\mu m$. Les différents circuits décrits ci-après ont alors été réalisés selon les procédes connus de fabrication des circuits intégrés. Les connexions de la tête avec les circuits du lecteur se font par les plots carrés situés le long du côté gauche.

La barrette est alimentée en courant continu entre ses deux extrémités par les plots + et −. La bande magnétique défile perpendiculairement au plan de la plaquette de manière à ce que le bord de la barrette 202 vienne lécher sa surface. Le champ magnétique développé par la bande est donc perpendiculaire au plan de la barrette et induit donc par effet Hall des tensions qui reproduisent les variations du champ enregistré sur la bande.

Un ensemble de connexions telles que 203 réparties régulièrement le long du bord interne de la barrette 202 selon la même répartition que les chemins définis dans la figure 1 permet de prélever ces tensions.

Les 25 connexions du haut sont réunies à un premier amplificateur-sommateur 204 et les 25 connexions du bas à un deuxième amplificateur-sommateur 205. Ces deux amplificateurs délivrent sur les plots de sortie $S_1$ et $S_2$ respectivement deux porteuses à la fréquence ligne modulées en amplitude par les signaux sonores. Ces amplificateurs, comme tous ceux vus plus loin ont une entrée capacitive qui permet d'éliminer la composante continue due à l'alimentation en continu de la barrette 202.

Les autres connexions, soit 400 pour la luminance et 150 pour la chrominance sont respectivement connectées à des amplificateurs tels que 206 qui permettent d'élever le niveau des signaux de lecture à une valeur convenable pour attaquer un dispositif à transfert de charge connu dans l'art sous le nom de DTC, soit environ 1 V.

Les signaux en sortie des amplificateurs 206 sont appliqués respectivement pour la luminance à un DTC 207 et pour la chrominance à un DTC 208. Ces dispositifs sont chargés en parallèle et délivrent en série respectivement le signal de luminance sur le plot Y et le signal de chrominance sur le plot Y−C. Une telle conversion série-parallèle est banale dans le cas de signaux numériques: elle est aussi connue dans le cas de signaux analogique pour les senseurs d'image et décrite notamment page 143 figure 28 dans l'ouvrage intitulé «Charge-Coupled Devices: Technology and Applications» édité par IEEE avec comme numéro de référence à la bi liothèque du congrès des USA 76-20887. Dans le dispositif décrit dans cet ouvrage les signaux en entrée sont lumineux et induisent des charges par effet photoélectrique. La transposition pour obtenir les DTC 207 et 208 est immédiate puisque si l'on connecte sur une cellule la connexion de sortie d'un des amplificateurs 206 les charges sont apportées par cette connexion au lieu d'être créées in situ par des photons.

On remarque que la fabrication d'un DTC nécessite le recours à la technologie dite métal-oxyde-silicium ou MOS. Bien que l'on sache réaliser des technologies combinant celle-ci pour les DTC et la technologie bipolaire pour les amplificateurs, une telle réalisation est délicate à mener à bien. Il est donc préférable de réaliser les amplificateurs en technologie MOS ainsi que le décrit Alcira Yuhawa dans un article intitulé «All-MOS Differential Amplifier» publié pages 47 à 50 dans le numéro 43 d'octobre 1976 de la revue NEC Research and Development.

Il est nécessaire de transférer les charges stockées dans les cellules d'entrée des DTC jusque dans les cellules des chaines de transfert série de chacun des DTC. Plusieurs méthodes sont utilisables. Dans la réalisation décrite ici on utilise un système de transfert à trois phases identique à celui utilisé pour le transfert en série le long du DTC, mais limité à un seul pas de transfert. Les signaux nécessaires et bien connus dans la technique des DTC sont élaborés dans un circuit 209 sous la commande d'une impulsion externe de synchronisation T qui arrive lorsque les cellules d'entrées sont toutes chargées. On remarque que la connexion multiple par laquelle ces signaux sont appliqués du circuit 209 aux DTC 207 et 208 est figurée sous la forme d'une flèche simple supportant un rond qui indique la multiplicité des conducteurs.

Pour obtenir un signal vidéo directement utilisable — au matriçage de chrominance près — il faut vider les DTC pendant la durée d'une ligne moins l'intervalle de suppression ligne, soit environ 50 µs. Pour cela on utilise deux signaux d'horloge, l'un H400 délivrant 400 impulsions par ligne, et l'autre H150 délivrant 150 impulsions par ligne. Ces signaux sont appliqués respectivement aux circuits 210 et 211 semblables au circuit 209 et qui permettent d'élaborer les signaux de transfert à trois phases utilisés dans la réalisation décrite.

En fait le mouvement d'une bande magnétique n'est jamais rigoureusement rectiligne et de ce fait les segments de piste présentent toujours une certaine obliquité — d'ailleurs variable — par rapport à la barette 202.

Pour compenser cette obliquité les DTC 207 et 208 comportent chacun un ensemble de portes analogiques — un simple transistor à effet de champ suffit à cet usage — dont chacune est connectée entre la sortie d'un des amplificateurs 206 et la cellule d'entrée correspondante du DTC. Un ensemble de comparateurs tels que 212 permet d'ouvrir ces portes une à une au fur et à mesure que le point à lire sur la bande passe devant le point de lecture correspondant sur la barrette 202. Pour cela la sortie de chacun de ces comparateurs est reliée à l'entrée de commande de l'une des portes.

Ces comparateurs émettent un signal d'ouverture lorsque la différence des tensions à leurs entrées change de sens. Ces entrées sont reliées respectivement à deux lignes résistives 213 et 214 connectées entre la masse et respectivement deux générateurs de signaux 215 et 216. Le potentiel varie linéairement le long de ces lignes entre les générateurs et la masse et dépend de la différence de phase entre les signaux — supposés identiques au déphasage près — fournis par les générateurs. En connectant les entrées d'un même comparateur comme sur la figure au même niveau sur les lignes branchées en sens inverses — la somme des deux distances des points de connexion par rapport à la masse restant donc constante — on déclenchera successivement les comparateurs les uns après les autres de haut en bas ou de bas en haut et dans un laps de temps variable selon le signal fourni par les générateurs.

Pour obtenir une compensation parfaite les générateurs doivent être relativement complexes, mais on peut obtenir un résultat correct avec des circuits relativement simples comme on va le montrer.

Les signaux en sortie des amplificateurs 204 et 205 sont la somme des signaux sur leurs entrées. Ces derniers sont des porteuses sinusoïdales à la fréquence ligne modulées en amplitude par le même signal pour chaque voie, en opposition de phase à l'enregistrement, et avec un déphasage supplémentaire à la lecture dû à l'obliquité entre la bande et la tête; on a donc en sortie des amplificateurs 204 et 205 respectivement deux porteuses sinusoïdales modulées en amplitude et dont l'écart de déphasage par rapport à $\pi$ représente justement cette obliquité. Pour pouvoir exploiter ces signaux on les amplifie dans deux amplificateurs écrêteurs 217 et 218 qui délivrent donc des signaux carrés et on prend comme circuits 215 et 216 deux filtres actifs qui permettent d'obtenir deux ondes sinusoïdales sensiblement pures, débarassées le leurs signaux de modulation et déphasées. En considérant alors l'un des comparateurs 212 connecté à une distance normée $\alpha$ par rapport à la masse sur la ligne 213 et donc à une distance $1 - \alpha = \beta$ par rapport à la masse sur la ligne 214, la condition de changement de signe de la différence des tensions pour le basculement du comparateur s'exprime, $\omega$ étant la fréquence ligne et $\varDelta$ T le retard de $S_2$ sur $S_1$ dû à l'obliquité par:

$$\alpha \sin \omega t < (1 - \alpha) \sin$$

$$[\omega (t - \varDelta T) + \pi]$$

soit $\alpha \sin \omega t + (1 - \alpha) \sin \omega (t - \varDelta T) < 0$.

Lorsque l'obliquité est nulle, soit $\varDelta T = 0$, cet inégalité se trouve vérifiée, en partant de l'origine des temps et en restant dans une période, pour $t > \frac{\pi}{\omega}$ quelque soit $\alpha$. Ceci signifie que, comme c'est normal, tous les comparateurs se déclenchent au milieu de la lecture d'un segment et se referment à la fin de cette lecture.

Lorsque l'obliquité n'est pas nulle elle ne peut de toute façon être telle que l'on commence à lire le haut du segment suivant, avant que le bas du précédent ne soit lu, ce qui impose que $\varDelta$ T soit compris entre $\pm \frac{\pi}{\omega}$. Dans ces conditions on voit que cette inégalité est vérifiée pour $\alpha = 1$ à partir de $t = \frac{\pi}{\omega}$, ce qui est normal puisque le décalage est pris à partir d'une origine nulle pour cette valeur de $\alpha$. Elle est vérifiée

aussi pour $\alpha = 0$ à partir de $t = \dfrac{\pi}{\omega} + \varDelta T$ ce qui est aussi normal puisque cela constitue une condition aux limites, et enfin pour $\alpha = 0,5$ à partir de $t = \dfrac{\pi}{\omega} + \dfrac{\varDelta T}{2}$ ce qui montre que la correction d'obli</cité est parfaite tant au centre du segment qu'à ses extrémités.

Pour les autres valeurs de $\alpha$ la valeur d t est donnée par l'inégalité suivante, directement déduite de celle vue plus haut:

$$\sin \omega \, (t - \varDelta T) + 2\alpha \cos \omega \left( t - \frac{\varDelta T}{2} \right) \sin \omega \, \frac{\varDelta T}{2} < 0.$$

Cette relation n'est pas linéaire entre t et $\alpha$, ce qui montre que la correction n'est pas parfaite en dehors des trois points précédents, mais il est aisé de montrer graphiquement que cette relation est monotone pour toute valeur du paramètre $\varDelta T$ comprise dans l'intervalle préalablement défini. Comme elle passe par les trois points où la correction est parfaite, l'écart de correction entre ces points est très faible.

Pour asservir le moteur d'entrainement du lecteur on peut d'une manière connue partir de l'un des signaux $S_1$ ou $S_2$ qui contiennent chacun une porteuse dont les fluctuations de phase et le fréquence reproduisent les irrégularités de vitesse de la bande magnétique.

Dans la réalisation décrite on tire parti du traitement déjà réalisé sur les signaux $S_1$ et $S_2$ par les circuits 215 à 218. En effet on a, comme on l'a vu, en sortie de ces circuits les deux porteuses débarassées de leurs modulations. D'autre part, ainsi que l'on a montré plus haut l'écart de linéarité de la correction d'obliquité est nulle au centre des lignes 213 et 214, et de plus comme les signaux en ces points représentent les variations de vitesse linéaire au centre de la bande, l'influence des mouvements de lacet est considérablement diminuée sur ces signaux ce qui est intéressant puisque ces mouvements sont essentiellement dus à la cinématique du lecteur et ne peuvent être corrigés en agissant sur le moteur. On additionne donc les signaux pris au centre des lignes 213 et 214 dans un amplificateur 219 qui délivre une porteuse pure sur le plot de sortie SY.

Pour réaliser une tête complète on fixe un jeu de fils de connexions sur les plots de la plaquette puis on insère celle-ci entre deux blocs qui d'une part forment boitier et d'autre part présentent une face de guidage de la bande magnétique. La barrette de matériau magnéto-sensible vient affleurer sur cette face le bord de la fente formée par la jonction des deux blocs ce qui permet de lire la bande lorsqu'elle défile sur la face de guidage.

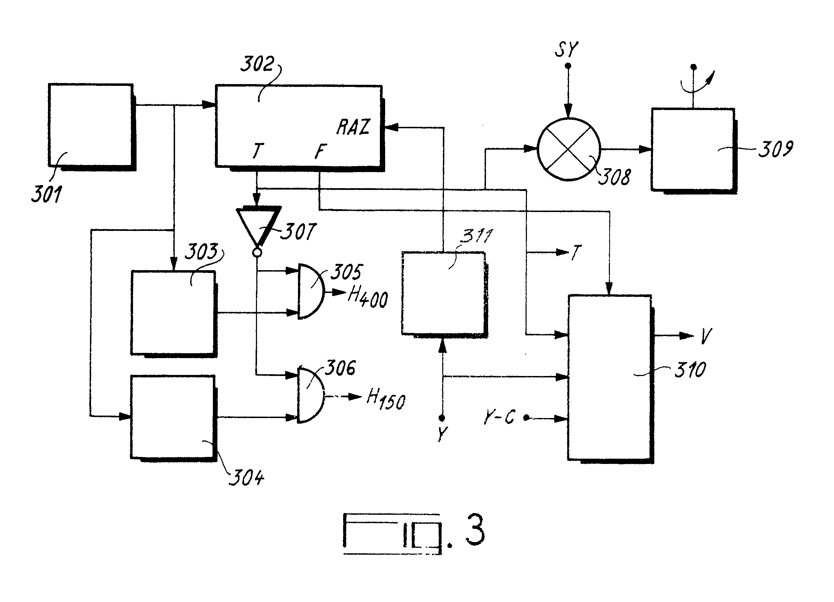

Le lecteur qui est muni de cette tête comprend un mécanisme de défilement et une logique d'exploitation classiques. Il comprend également des circuits reliés à la tête de lecture et dont on a représenté le schéma synoptique sur la figure 3.

Un maitre-oscillateur 301, à quartz par exemple, délivre un signal d'horloge à une base de temps 302 de type connu qui permet de délivrer sur deux sorties des impulsions de synchronisation de ligne T et de trame F. Ce signal d'horloge est appliqué également à des diviseurs 303 et 304 qui permettent d'obtenir d'autres signaux d'horloge aux fréquences nécessaires pour vider les DTC 207 et 208. Ces signaux d'horloge sont appliqués respectivement à deux portes 305 et 306. Les impulsions de synchronisation de ligne T sont inversées dans un inverseur 307 qui permet d'obtenir un signal qui ouvre ces portes 305 et 306 entre les impulsions lignes de façon à ce que la porte 305 délivre entre deux impulsions lignes 400 impulsions de décalage sur une connexion reliée au plot $H_{400}$, et que la porte 306 délivre dans le même temps 150 autres impulsions de décalage sur une connexion reliée au plot $H_{150}$.

Les impulsions de synchronisation de ligne T sont aussi appliquées à une connexion reliée au plot T ce qui permet de charger les DTC 207 et 208 en début de ligne.

Pour maintenir la synchronisation à la lecture les impulsions T sont également appliquées à un comparateur de phase 308 dont l'autre entrée est connectée au plot SY. Ce comparateur délivre un signal d'erreur qui pilote le moteur de défilement 309 du lecteur. Ainsi lorsque la vitesse du moteur 309 est stabilisée les impulsions de synchronisation de ligne sont en phase avec les porteuses son qui sont elles-même en phase avec les impulsions lignes correspondant au signal vidéo enregistré, ce qui permet la synchronisation de la lecture.

Pour obtenir un signal vidéo composite respectant les normes d'un standard défini on utilise un circuit de mixage 310 d'un type couramment utilisé dans les équipements de télédiffusion tels que les caméras électroniques par exemple. Ce circuit reçoit le signal de luminance Y, le signal de chrominance Y—C, et les signaux de synchronisation ligne T et trame F; il délivre un signal vidéo composite V.

La synchronisation procurée par le comparateur 308 ne porte que sur les lignes. On obtient la synchronisation trame en extrayant du signal de luminance Y des signaux représentant le début ou la fin des trames — par exemple les signaux de suppression trame ou tout autre signal caractéristique introduit dans Y au stade de l'enregistrement. Ces signaux sont extraits dans le détecteur 311 lui aussi d'un type usuel en télédiffusion et appliqués à une entrée RAZ de la base de temps 302. Ils permettent ainsi d'assurer un recalage initial de cette base de temps et un maintien ultérieur du calage entre ces signaux et les impulsions de synchronisation de trame F. La base de temps 302 assure la stabilité à court terme des impulsions F.

Dans la réalisation physique du dispositif représenté en figure 2, l'élément dont les dimensions imposent le plus de contraintes est le DTC 207. On peut réaliser un DTC avec un pas de 10 $\mu$, mais il est plus aisé de prévoir 20 µ et dans ces conditions la longueur du DTC excède celle de la ligne 202. Dans ces conditions on utilise une plaquette 201 dont la hauteur permet de réaliser les DTC 207 et 208 avec le positionnement représenté, et en gardant pour la barrette 202 la longueur imposée par la largeur de la bande magnétique on réalise un épanouissement des connexions entre cette barrette et les amplificateurs 206.

Une autre réalisation des contacts magnéto-sensibles consiste à segmenter la barrette 202 sous forme d'un ensemble de segments correspondant chacun à un point de contact et à alimenter ces segments individuellement à partir de deux peignes de connexion reliés respectivement aux plots + et −.

En utilisant une technologie actuelle à forte résolution (trait minimum large de 3 µm) l'ensemble des circuits de la figure 2 tient place sur la plaquette de dimensions 7 × 4 mm déjà citée ce qui place cette tête de lecture dans la catégorie des circuits à haute intégration réalisables selon les technologies disponibles aujourd'hui.

Bien que l'on n'ait décrit que le cas où les segments de piste sont perpendiculaires à l'axe de la bande magnétique, l'invention s'étend au cas où ceux-ci sont plus ou moins inclinés sur cet axe en fonction de la largeur de la bande et de la densité maximale d'information le long d'un segment. Dans ce cas la tête elle-même sera inclinée sur l'axe de la bande.

## Revendications

1. Tête de lecture magnétique destinée à lire, sur un support magnétique défilant selon une direction, une succession de segments (Fig. 1) de piste de même longueur, parallèles entre eux et non parallèles à cette direction, l'acquisition des données ($S_1$, Y, Y−R, Y−B, $S_2$) enregistrées sur chaque segment de piste étant effectuée en parallèle au moyen d'éléments d'un capteur magnéto-électrique (202) en forme de barrette de longueur égale à celle des segments de piste, et la restitution des données acquises et stockées dans un circuit de mémoire étant effectuée en série sous le contrôle d'une horloge externe; cette tête de lecture étant caractérisée en ce que:
— une partie au moins des signaux de lecture (Y, Y−R, Y−B) sont amplifiés (206) et stockés dans des dispositifs à transfert de charges (207, 208), dont chaque entrée est contrôlée par une porte analogique recevant un signal de lecture;
— une autre partie des signaux de lecture ($S_1$, $S_2$), acquis simultanément en vue de mesurer l'obliquité d'un segment de piste par rapport au capteur (202) par deux groupes d'éléments situés aux deux extrémités du capteur (202) sont traités, pour chacun des deux groupes, par un amplificateur sommateur (204, 205) suivi par un amplificateur écrêteur (217, 218) et par un générateur de signaux (215, 216) qui délivre une onde sinusoïdale sur une ligne résistive (213, 214), l'écart de déphasage entre les deux ondes sinusoïdales, correspondant aux deux groupes d'éléments du capteur, représentant l'obliquité d'un segment de piste par rapport au capteur;
— l'acquisition en parallèle des signaux de lecture sur les entrées des dispositifs à transfert de charge (207, 208) est commandée par une pluralité de comparateurs (212), les deux entrées de chaque comparateur étant connectées en deux points des deux lignes résistives (213 et 214), les niveaux d'atténuation des deux points étant symétriquement opposés, et la sortie de chaque comparateur (212) étant connectée à l'une des portes analogiques de contrôle des entrées des dispositifs à transfert de charge (207, 208), les comparateurs (212) émettant un signal d'ouverture lorsque la différence des tensions à leurs entrées change de sens;
— la restitution en série des signaux de lecture stockés dans les dispositifs à transfert de charge (207, 208) étant commandée par horloge externe (T, $H_{400}$, $H_{150}$), par l'intermédiaire de circuits d'élaboration des signaux de transfert (209, 120, 211) qui commandent les sorties des dispositifs à transfert de charges (207, 208).

2. Tête de lecture magnétique selon la revendication 1, caractérisée en ce que les signaux de lecture acquis par les deux groupes d'éléments situés aux deux extrémités du capteur (202) sont délivrés sur des bornes ($S_1$ et $S_2$) montées en dérivation à la sortie de chacun des amplificateurs sommateurs (204 et 205).

3. Tête de lecture magnétique selon la revendication 1, caractérisée en ce qu'elle comporte un amplificateur sommateur (219), dont les deux entrées sont connectées aux deux points milieux des deux lignes résistives (213 et 214) et dont la sortie délivre sur une borne ($S_y$) un signal de synchronisation de défilement du support magnétique.

4. Tête de lecture magnétique selon l'une quelconque des revendications 1 à 3, caractérisée en ce que l'ensemble des moyens de lecture (202), de stockage (207, 208) et de traitement (204 à 219) des signaux est intégré sur un substrat (201) en silicium selon la technologie des circuits intégrés.

## Patentansprüche

1. Magnetischer Lesekopf zum Lesen einer Reihe von auf einem in einer gegebenen Richtung ablaufenden magnetischen Träger gebildeten Spursegmenten (Fig. 1) gleicher Länge, die parallel zueinander, aber nicht parallel zu der genannten Richtung liegen, wobei die auf jedem Spursegment aufgenommenen Größen ($S_1$, Y, Y—B, $S_2$) vermittels der Elemente eines elektromagnetischen Abnehmers (202) in Form eines Stabes mit einer der Spursegmentlänge gleichen Länge parallel abgenommen werden und die abgenommenen und in einem Speicherkreis gespeicherten Größen serienweise unter Steuerung vermittels eines äußeren Zeitgebers wiedergegeben werden, dadurch gekennzeichnet, daß

— wenigstens ein Teil der Lesesignale (Y, Y—R, Y—B) verstärkt (206) und in Ladungsübertragungseinrichtungen (207, 208) gespeichert werden, deren Eingänge durch je eine ein Lesesignal empfangende Analogausblendstufe gesteuert wird;

— ein anderer Teil der Lesesignale ($S_1$, $S_2$), der gleichzeitig zwecks Messung der Neigung eines Spursegmentes in bezug auf den Abnehmer (202) durch zwei an den beiden Enden des Abnehmers angeordnete Elementgruppen abgenommen, und für jede dieser Gruppen durch einen Addierverstärker (204, 205) behandelt wird, dem einen Amplitudenbegrenzungsverstärker (217, 218) nachgeschaltet ist, sowie ein Signalgeber (215, 216), welcher in einer Widerstandleitung (213, 214) eine sinusförmige Welle erzeugt, wobei die Phasenverschiebung zwischen den den beiden Abnehmerelementgruppen entsprechenden Sinuswellen der Neigung eines Spursegments in bezug auf den Abnehmer entspricht;

— die parallele Abnahme der Lesesignale an den Eingängen der Ladungsübertragungseinrichtungen (207, 208) durch eine Mehrzahl von Komparatoren (212) gesteuert wird, wobei die beiden Eingänge jedes Komparators an zwei Stellen der beiden Widerstandsleitungen (213 und 214) angeschlossen sind, deren jeweilige Schwächungspegel einander symmetrisch entgegengesetzt sind, und wobei der Ausgang jedes Komparators (212) an eine der die Eingänge der Ladungsübertragungsvorrichtungen steuernden Analogausblendstufen (207, 208) angeschlossen ist, während die Komparatoren (212) ein Öffnungssignal erzeugen, wenn die Differenz zwischen den an ihren Eingängen herrschenden Spannungen umgewendet wird;

— die serienweise Wiederherstellung der in den Ladungsübertragungseinrichtungen (207, 208) gespeicherten Lesesignale durch einen äußeren Zeitgeber (T, $H_{400}$, $H_{150}$) über Übertragungssignale erzeugende Kreise (209, 120, 211) gesteuert wird, welche die Ausgänge der Ladungsübertragungseinrichtungen (207, 208) steuern.

2. Magnetischer Lesekopf nach Anspruch 1, dadurch gekennzeichnet, daß die durch die beiden an den beiden Enden des Abnehmers (202) angeordneten Elementgruppen abgenommenen Lesesignale an an den Ausgang jedes Addierverstärkers (204 und 205) im Nebenschluß angeschlossene Klemmen ($S_1$ und $S_2$) übertragen werden.

3. Magnetischer Lesekopf nach Anspruch 1, dadurch gekennzeichnet, daß er einen Addierverstärker (219) aufweist, dessen beide Eingänge mit den beiden mittleren Stellen der beiden Widerstandsleitungen (213 und 214) verbunden sind, und dessen Ausgang ein Synchronisierungssignal für den Ablauf des magnetischen Trägers an eine Klemme ($S_y$) überträgt.

4. Magnetischer Lesekopf nach einem der Ansprüche 1 bis 3, dadurch gekennzeichnet, daß die Lesemittel (202), die Speichermittel (207, 208) und die Signalbehandlungsmittel (204 bis 219) gemäß der Technik der integrierten Stromkreise zusammen auf einer Siliciumträgerschicht integriert sind.

**Claims**

1. A magnetic reading head adapted to read out, on a magnetic support displaced in a given direction, a succession of track segments (fig. 1) of equal length, parallel to each other but not parrallel to said given direction, where in the acquisition of the items ($S_1$, Y, Y—R, Y—B, $S_2$) recorded on each track segment is effected parallely by means of elements of an electromagnetic captor (202) in the form of a bar the length of which is equal to that of said track segments, while the restitution of the items acquired and stored in a memorizing circuit is effected in series under the control of an external clock-circuit, said reading head being characterized in that:

— at least a portion of the reading signals (X, Y—R, Y—B) is amplified (206) and stored in load transfer devices (207, 208) each input of which is controlled by an analog gate receiving a reading signal;

— another part of said reading signals ($S_1$, $S_2$), acquired simultaneously with a view to measuring the inclination of a track-segment with respect to the captor (202) by two groups of elements provided at the two ends of the captor (202), is processed, for each one of said groups, by a summing amplifier (204, 205) followed by a clipping amplifier (217, 218) and a signal generator (215, 216) which delivers a sinusoidal wave on a resistive line (213, 214) the phase difference between said two sinusoidal waves, which correspond to the two groups of captor elements, representing the inclination of a track segment with respect to the captor;

— the acquisition in series of the reading signals at the inputs of the load transfer devices (207, 208) is controlled by a plurality of comparators (212), both inputs of each comparator being connected to two points of the resistive lines (213 and 214), the attenuation levels of said two points being symmetrically opposed to each other, and the output of each comparator (212) being connected to one of said analog gates controlling the inputs of the load transfer devices (207, 208), said comparators (212) emitting an opening signal when the voltage difference at their inputs is reversed;

— the restitution in series of the reading signals stored in the load transfer devices (207, 208) is controlled by an external clock circuit (T, $H_{400}$, $H_{150}$) through circuits producing the transfer signals (209, 120, 211) which control the outputs of the load transfer devices (207, 208).

2. A magnetic reading head according to claim 1, characterized in that the reading signals acquired by the two groups of elements provided at the two ends of the captor (202) are delivered at terminals ($S_1$ and $S_2$) mounted in derivation at the output of each one of said amplifiers (204, 205).

3. A magnetic reading head according to claim 1, characterized in that it comprises a summing amplifier (219) the two inputs of which are connected to the two central points of said two resistive lines (213 and 214), and the output of which delivers at a terminal ($S_y$) a synchronizing signal related to the displacement of said magnetic support.

4. A magnetic reading head according to any one of claims 1 to 3, characterized in that the assembly constituted by the reading means (202), the storing means (207, 208) and the signal processing means (204 to 219) is integrated on a silicon substrate (201) in accordance with the technology of integrated circuits.

FIG. 1

FIG. 2

0 012 649

302

301

303

304

RAZ

T    F

307

305
H400

306
H150

311

T

308

SY

309

310

V

Y

Y-C

Fig. 3